# EUROPEAN PATENT SPECIFICATION

(11) **EP 2 493 265 B1**
(45) Date of publication and mention of the grant of the patent: **27.12.2017**
(21) Application number: 12155587.4
(22) Date of filing: 15.02.2012
(51) Int. Cl.: H05B 33/08

(54) **LED lighting device and illumination fixture with led lighting device**
LED-Beleuchtungsvorrichtung und Beleuchtungsbefestigung mit der LED-Beleuchtungsvorrichtung
Dispositif d'éclairage à DEL et accessoire d'éclairage avec dispositif d'éclairage à DEL

(30) Priority: 22.02.2011 JP 2011035791
(43) Date of publication of application: 29.08.2012
(73) Proprietor: Panasonic Intellectual Property Management Co., Ltd., Osaka-shi, Osaka 540-6207 (JP)
(72) Inventor: Mizukawa, Hiromitsu, Suita, Osaka (JP); Watanabe, Koji, Yawata, Kyoto (JP); Matsuda, Kenji, Hirakata, Osaka (JP)
(74) Representative: Rüger, Barthelt & Abel

(56) References cited:
- JP-A- 2001 178 137
- US-A1- 2007 170 874
- US-A1- 2010 289 418
- US-A1- 2011 025 217

## Description

### [Field of the Invention]

The present invention relates to an LED lighting device and an illumination fixture with the LED lighting device.

### [Background Art]

Generally, an LED lighting device is provided with an inrush current suppression circuit for suppressing an inrush current flowing through a capacitor that smoothes a power source voltage at the time of turning on a power source, or an output voltage of a switching circuit. The LED lighting device then operates the inrush current suppression circuit at the time of activating the switching circuit, and puts the inrush current suppression circuit in a non-operating state at the time when a predetermined switching circuit operates.

Furthermore, a predetermined switching circuit may not firstly be activated if the LED lighting device is provided with a plurality of switching circuits. Therefore, if the predetermined switching circuit does not firstly operate, the inrush current suppression circuit may operate to limit an input current.

Therefore, the LED lighting device cannot feed a sufficient current for operating another switching circuit, and thus the switching circuit may not be able to carry out an expected operation. The expected operation refers to, for example, supplying a desired output power to the switching circuit.

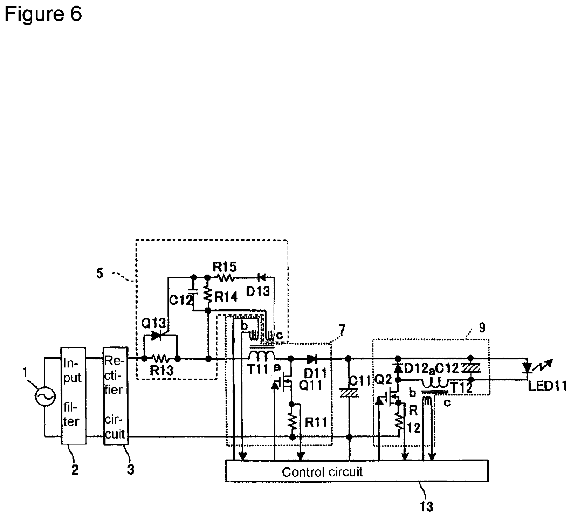

Fig. 6 shows a circuit configuration of a conventional LED lighting device that is configured by a switching circuit of a step-up chopper circuit 7 and a step-down chopper circuit 9 (see JPA- Heisei 5-257548 and JPA-Showa 60-51415).

The LED lighting device shown in Fig. 6 supplies a trigger signal of operation/non-operation of an inrush current suppression circuit 5 from the step-up chopper circuit 7. In this case, after a power source 1 is turned on, the step-down chopper circuit 9 is first activated, which causes an input current to flow through a resistor R13 of the inrush current suppression circuit 5.

US 2011/0025217 A1 discloses an LED lighting device according to the preamble of claim 1. This LED lighting device comprises a switching circuit with a flyback transformer connected between a power source and at least one LED. An inrush current suppression circuit between the power source and the primary side of the flyback transformer is provided and repeatedly switched between an operating state for limiting the inrush current and an non-operating state depending on the voltage measured in a second primary winding of the flyback transformer. The inrush current suppression circuit is thus put in the operating condition once in each switching cycle of the flyback transformer. JP 2001178137 A shows a DC power supply having two switching circuits in series connection and an inrush current suppression circuit.

### [Disclosure of the Invention]

### [Problems to be solved by the Invention]

The LED lighting device shown in Fig. 6 may not be able to store sufficient charges in a smoothing capacitor C11 at an output of the step-up chopper circuit 7 because of consumption of the input current due to a voltage generated at both ends of the resistor R13, and consumption of the input current by the step-down chopper circuit 9.

More specifically, in the LED lighting device shown in Fig. 6, the output of the step-up chopper circuit 7 may not reach a predetermined voltage value.

An object of the present invention is to provide an LED lighting device that can put an inrush current suppression circuit in a non-operating state after activation to carry out an expected operation with reliability, and an illumination fixture with the LED lighting device.

### [Means adapted to solve the Problems]

The present invention provides an LED lighting device according to claim 1. It comprises at least two switching circuits connected between a power source and an LED; a capacitor for smoothing a power source voltage generated by the power source, or an output voltage of the at least two switching circuits; and an inrush current suppression circuit for suppressing an inrush current flowing via the smoothing capacitor at the time of turning on the power source, wherein a trigger circuit is provided for generating a trigger signal for operation/non-operation of the inrush current suppression circuit from the at least two switching circuits; and the inrush current suppression circuit is put in a non-operating state at timing of operating a firstly-activated switching circuit.

In the LED lighting device, the trigger circuit preferably uses a voltage of a secondary winding of a winding component of each switching circuit.

Furthermore, the present invention provides an illumination fixture including the LED lighting device mounted thereon.

### [Effect of the Invention]

An LED lighting device and an illumination fixture with the LED lighting device according to the present invention can put an inrush current suppression circuit in the non-operating state after activation to carry out an expected operation with reliability.

### [Brief Description of the Drawings]

[Fig. 1] Fig. 1 is a diagram showing a circuit configuration of an illumination device according to a first embodiment of the present invention.
[Fig. 2] Fig. 2 is an example of other circuit configuration (1) of the illumination device according to the first embodiment.
[Fig. 3] Fig. 3 is an example of other circuit configuration (2) of the illumination device according to the first embodiment.
[Fig. 4] Fig. 4 is an example of other circuit configuration (3) of the illumination device according to the first embodiment.
[Fig. 5] Fig. 5 is a diagram showing a configuration of an illumination fixture according to a second embodiment of the present invention.
[Fig. 6] Fig. 6 is a diagram showing a circuit configuration of a conventional LED lighting device.

### [Best Mode for Carrying Out the Invention]

Embodiments of the present invention will be described below referring to drawings.

### (First embodiment)

An illumination device according to a first embodiment of the present invention generates a trigger signal of an inrush current suppression circuit by means of at least two switching circuits, and puts the inrush current suppression circuit in a non-operating state at timing of generating a trigger signal by a firstly-activated switching circuit. Thus, in the illumination device according to the present embodiment, the inrush current suppression circuit is put in the non-operating state immediately after activation after turning on a power source, allowing to feed an input current sufficiently. Therefore, the illumination device according to the present invention can certainly carry out an expected operation. The expected operation refers to, for example, feeding a desired output power to the switching circuit.

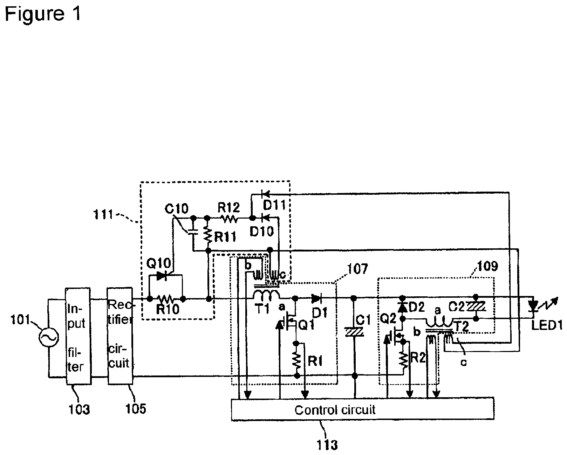

The illumination device according to the present embodiment acts as an LED lighting device that is configured as in Fig. 1, for example. A circuit configuration of the illumination device shown in Fig. 1 is provided with an input filter 103 connected to a power source 101, a rectifier circuit 105, a step-up chopper circuit 107, a step-down chopper circuit 109, a smoothing capacitor (C1), an inrush current suppression circuit 111, and a control circuit 113.

The power source 101 is an AC power source.

The step-up chopper circuit 107 includes a MOS-FET (Q1), a primary side a of a transformer T1 and one of secondary sides (an input side b) of the transformer T1, a diode D1, and a resistor R1. The transformer T1 includes a winding component.

The step-down chopper circuit 109 includes a MOS-FET (Q2), a primary side a of a transformer T2 and one of secondary sides (an input side b) of the transformer T2, a diode D2, a resistor R2, and a capacitor C2. The transformer T2 includes a winding component.

The inrush current suppression circuit 111 includes a resistor R10 acting as a current reducing component, a switching element Q10, a capacitor C10, resistors R11 and R12, diodes D10 and D11, the other of the secondary sides (an output side c) of the transformer T1, and the other of secondary sides (an output side c) of the transformer T2.

### (Operation of step-up chopper circuit 107)

Next, an operation of the step-up chopper circuit 107 will be described. A signal from one of the secondary sides (the input side b) of the transformer T1 generates a detection signal for turning on the MOS-FET (Q1).

Furthermore, a current which flows while the MOS-FET (Q1) is turned on is detected by the resistor R1, so that a detection signal for turning off the MOS-FET (Q1) is generated.

The control circuit 113 compares each detection signal with a reference voltage to determine timing of turning on/off the MOS-FET (Q1).

The control circuit 113 carries out control to match an output voltage of the step-up chopper circuit 107 with a predetermined voltage by generating a signal for turning on/off the MOS-FET (Q1) based on the determined timing.

### [Operation of step-down chopper circuit 109]

Next, an operation of the step-down chopper circuit 109 will be described. A signal from one of the secondary sides (the input side b) of the transformer T2 generates a detection signal for turning on the MOS-FET (Q2).

Furthermore, a current which flows while the MOS-FET (Q2) is turned on is detected by the resistor R2, so that a detection signal for turning off the MOS-FET (Q2) is generated.

The control circuit 113 compares each detection signal with a reference voltage to determine timing of turning on/off the MOS-FET (Q2).

The control circuit 113 carries out control to match a current fed to the LED 1 with a predetermined current by generating a signal for turning on/off the MOS-FET(Q2) based on the determined on/off timing.

### [Operation of inrush current suppression circuit 111]

The inrush current suppression circuit 111 is configured as follows. In addition, in the present embodiment, the resistor R10 acting as a current reducing component is provided for the purpose of reduction of the inrush current. Instead of the resistor R10, a thermistor may be used as the current reducing component.

The inrush current suppression circuit 111 is put in a non-operating state after the switching circuit (the step-up chopper circuit 107 and the step-down chopper circuit 109) is activated. More specifically, in the present embodiment, an input current fed from the power source 101 is almost short-circuited (conducted) via not a current reducing component (R10) but the switching element Q10.

In the present embodiment, a thyristor is used as the switching element Q10. A relay, a transistor, or an MOS-FET and the like may be used as the switching element Q10.

In Fig. 1, a starting voltage for turning on the thyristor that acts as the switching element Q10 is taken from the other of the secondary sides (the output side c) of the transformer T1 of the step-up chopper circuit 107 and the other of the secondary sides (the output side c) of the transformer T2 of the step-down chopper circuit 109.

The other of the secondary sides (the output side c) of the transformer T1 of the step-up chopper circuit 107 and the other of the secondary sides (the output side c) of the transformer T2 of the step-down chopper circuit 109 act as a trigger circuit. Then, the trigger circuit generates a trigger signal for operation/non-operation of the inrush current suppression circuit 111.

In the present embodiment, an OR circuit includes the diodes D10 and D11, and the resistors R11 and R12 so that either of the switching circuits, namely the step-up chopper circuit 107 or the step-down chopper circuit 109, may be firstly activated.

An output voltage of the OR circuit is then smoothed by the capacitor C10 to be a starting voltage for turning on the switching element Q10 (the thyristor).

Therefore, in the illumination device according to the present embodiment, the inrush current can be suppressed, after turning on the power source, by the resistor R10 that acts as the current reducing component. After suppressing the inrush current, the illumination device according to the present embodiment can ensure the starting voltage of the switching element Q10 regardless of which of the step-up chopper circuit 107 and the step-down chopper circuit 109 is firstly activated.

Accordingly, in the illumination device according to the present embodiment, the switching element Q10 is immediately turned on after turning on the power source, and thus each switching circuit (the step-up chopper circuit 107 and the step-down chopper circuit 109) can certainly carry out the expected operation.

### <Other configuration example (1)>

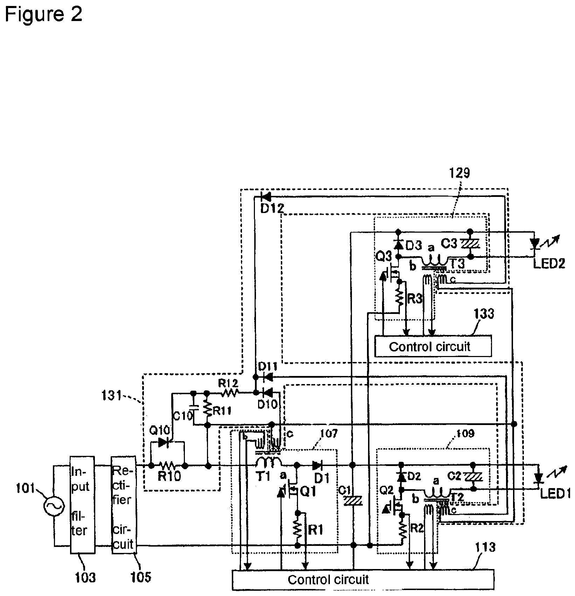

Here, Fig. 2 shows other circuit configuration example (1) of the illumination device according to the present embodiment. The circuit configuration example (1) shown in Fig. 2 differs from the circuit configuration example shown in Fig. 1 in that (1) a lighting circuit of an LED 2 is added, and (2) a configured of the inrush current suppression circuit is changed for the lighting circuits of the LED1 and LED 2.

Hereinafter, in the circuit configuration shown in Fig. 2, the same reference numerals as in Fig. 1 refer to the same circuit configuration as the illumination device shown in Fig. 1 and detailed explanations thereof will be omitted.

The configuration shown in Fig. 2 is provided with a step-down chopper circuit 129 as a lighting circuit of the LED 2 and a control circuit 133 therefor.

### [Step-down chopper circuit 129]

The step-down chopper circuit 129 includes a MOS-FET (Q3), a primary side a of a transformer T3 and one of secondary sides (an input side b) of the transformer T3, a diode D3, a resistor R3, and a capacitor C3.

Next, an operation of the step-down chopper circuit 129 will be described. A signal from one of the secondary sides (the input side b) of the transformer T3 generates a detection signal for turning on the MOS-FET (Q3).

Furthermore, a current which flows while the MOS-FET (Q3) is turned on is detected by the resistor R3, so that a detection signal for turning off the MOS-FET (Q3) is generated.

The control circuit 133 compares each detection signal with a reference voltage to determine timing of turning on/off the MOS-FET (Q3).

The control circuit 133 carries out control to match a current fed to the LED 2 with a predetermined current by generating a signal for turning on/off the MOS-FET (Q3) based on the determined timing.

### [Configuration of inrush current suppression circuit 131]

The inrush current suppression circuit 131 is configured as follows. In addition, also in the present embodiment, the resistor R10 acting as a current reducing component is provided for the purpose of reduction of the inrush current. Instead of the resistor R10, a thermistor may be used as the current reducing component.

The inrush current suppression circuit 131 shown in Fig. 2 includes the resistor R10, the switching element Q10, the capacitor C10, the resistors R11 and R12, the diodes D10, D11 and a diode D12, and the other of the secondary sides (output side c) of the transformers T1, T2 and T3.

The inrush current suppression circuit 131 is put in a non-operating state after the switching circuit (the step-up chopper circuit 107, the step-down chopper circuit 109 and the step-down chopper circuit 129) is activated. More specifically, an input current fed from the power source 101 side is almost short-circuited (conducted) via not the current reducing component R10 but the switching element Q10.

In Fig. 2, a starting voltage for turning on the thyristor that acts as the switching element Q10 is taken from the other of the secondary sides (the output side c) of the transformer T1 of the step-up chopper circuit 107, the other of the secondary sides (the output side c) of the transformer T2 of the step-down chopper circuit 109 and the other of the secondary sides (the output side c) of the transformer T3 of the step-down chopper circuit 129.

The other of the secondary sides (the output side c) of each of the transformers of the step-up chopper circuit 107, the step-down chopper circuit 109 and the step-down chopper circuit 129 acts as a trigger circuit. Then, the trigger circuit generates a trigger signal for operation/non-operation of the inrush current suppression circuit 131.

In the embodiment shown in Fig. 2, an OR circuit includes the diodes D10, D11 and D12, and the resistors R11 and R12 so that any one of the switching circuits, namely the step-up chopper circuit 107, or the step-down chopper circuits 109 and 129, may be firstly activated.

The output voltage of the OR circuit is then smoothed by the capacitor C10 to be a starting voltage for turning on the switching element Q10 (the thyristor).

Therefore, in the illumination device according to the present embodiment, the inrush current can be suppressed, after turning on the power source, by the resistor R10 that is the current reducing component, also in the configuration shown in Fig. 2. After suppressing the inrush current, the illumination device according to the present embodiment can ensure the starting voltage of the switching element Q10 regardless of which one of the step-up chopper circuit 107, the step-down chopper circuit 109 and the step-down chopper circuit 129 is firstly activated.

Accordingly, in the illumination device according to the present embodiment, the switching element Q10 is immediately turned on after turning on the power source, and thus each switching circuit (the step-up chopper circuit 107, the step-down chopper circuit 109 and the step-down chopper circuit 129) can certainly carry out the expected operation, also in the configuration shown in Fig. 2.

### <Other configuration example (2)>

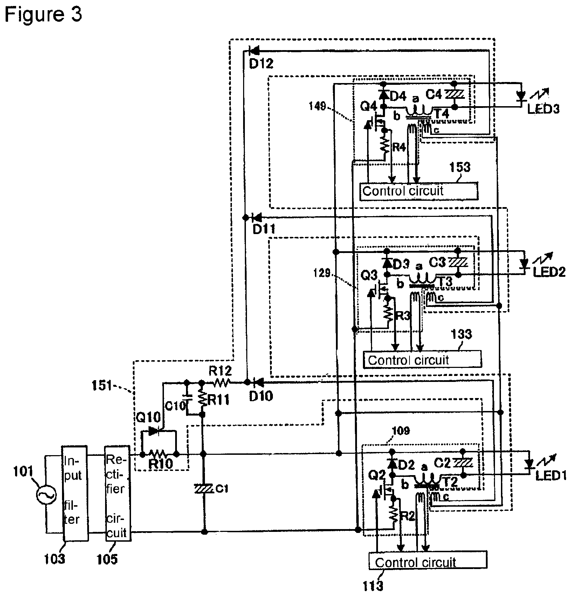

Here, Fig. 3 shows other circuit configuration example (2) of the illumination device according to the present embodiment. The circuit configuration example (2) shown in Fig. 3 differs from the circuit configuration example shown in Fig. 1 in that (1) the step-up chopper circuit 107 is not included, (2) lighting circuits of the LED 2 and the LED 3 are added, and (3) the configuration of the inrush current suppression circuit is changed for the lighting circuits of the LED 1, LED 2 and LED 3.

Hereinafter, in the circuit configuration shown in Fig. 3, the same reference numerals as in Fig. 1 refer to the same circuit configuration as the illumination device shown in Fig. 1 and detailed explanations thereof will be omitted.

The configuration shown in Fig. 3 is provided with the step-down chopper circuit 129 as a lighting circuit of the LED 2 and a control circuit 133 therefor.

### [Step-down chopper circuit 129]

The step-down chopper circuit 129 includes the MOS-FET (Q3), the primary side a of the transformer T3 and one of the secondary sides (the input side b) of the transformer T3, the diode D3, the resistor R3, and the capacitor C3.

Next, the operation of the step-down chopper circuit 129 will be described. A signal from one of the secondary sides (the input side b) of the transformer T3 generates a detection signal for turning on the MOS-FET (Q3).

Furthermore, a current which flows while the MOS-FET (Q3) is turned on is detected by the resistor R3, so that a detection signal for turning off the MOS-FET (Q3) is generated.

The control circuit 133 compares each detection signal with a reference voltage to determine the timing of turning on/off the MOS-FET (Q3).

The control circuit 133 carries out control to match a current fed to the LED 2 with a predetermined current by generating a signal for turning on/off the MOS-FET (Q3) based on the determined timing.

The configuration shown in Fig. 3 is provided with a step-down chopper circuit 149 as a lighting circuit of the LED 3 and a control circuit 153 therefor.

### [Step-down chopper circuit 149]

The step-down chopper circuit 149 includes a MOS-FET (Q4), a primary side a of a transformer T4 and one of secondary sides (an input side b) of the transformer T4, a diode D4, a resistor R4, and a capacitor C4.

Next, an operation of the step-down chopper circuit 149 will be described. A signal from one of the secondary sides (the input side b) of the transformer T4 generates a detection signal for turning on the MOS-FET (Q4).

Furthermore, a current which flows while the MOS-FET (Q4) is turned on is detected by the resistor R4, so that a detection signal for turning off the MOS-FET (Q4) is generated.

The control circuit 153 compares each detection signal with a reference voltage to determine timing of turning on/off the MOS-FET (Q4).

The control circuit 153 carries out control to match a current fed to the LED 3 with a predetermined current by generating a signal for turning on/off the MOS-FET (Q4) based on the determined timing.

### [Configuration of inrush current suppression circuit 151]

The inrush current suppression circuit 151 is configured as follows. In addition, also in the present embodiment, the resistor R10 acting as a current reducing component is provided for the purpose of reduction of the inrush current. Instead of the resistor R10, a thermistor may be used as the current reducing component.

The inrush current suppression circuit 151 shown in Fig.3 includes the resistor R10, the switching element Q10, the capacitor C10, the resistors R11 and R12, the diodes D10, D11 and D12, and the other of the secondary sides (the output side c) of the transformers T2, T3 and T4.

The inrush current suppression circuit 151 is put in a non-operating state after the switching circuit (the step-down chopper circuit 109, the step-down chopper circuit 129 and the step-down chopper circuit 149) is activated. More specifically, an input current fed from the power source 101 side is almost short-circuited (conducted) via not the resistor R10 as a current reducing component but the switching element Q10.

In Fig. 3, a starting voltage for turning on the thyristor that acts as the switching element Q10 is taken from the other of the secondary sides (the output side c) of the transformer T2 of the step-down chopper circuit 109, the other of the secondary sides (the output side c) of the transformer T3 of the step-down chopper circuit 129, and the other of the secondary sides (the output side c) of the transformer T4 of the step-down chopper circuit 149.

The other of the secondary sides (the output side c) of each of the transformers of the step-down chopper circuit 109, the step-down chopper circuit 129 and the step-down chopper circuit 149 acts as a trigger circuit. Then, the trigger circuit generates a trigger signal for operation/non-operation of the inrush current suppression circuit 151.

In the configuration shown in Fig. 3, an OR circuit includes the diodes D10, D11 and D12, and the resistors R11 and R12 so that any one of the switching circuits, namely the step-down chopper circuit 109, the step-down chopper circuit 129 or the step-down chopper circuit 149, may be firstly activated.

The output voltage of the OR circuit is then smoothed by the capacitor C10 to be a starting voltage for turning on the switching element Q10 (the thyristor).

Therefore, in the illumination device according to the present embodiment, the inrush current can be suppressed, after turning on the power source, by the resistor R10 that is the current reducing component, also in the configuration shown in Fig. 3. After suppressing the inrush current, the illumination device according to the present embodiment can ensure the starting voltage of the thyristor acting as the switching element Q10, regardless of which one of the step-down chopper circuit 109, the step-down chopper circuit 129 or the step-down chopper circuit 149 is firstly activated.

Accordingly, in the illumination device according to the present embodiment, the switching element Q10 is immediately turned on after turning on the power source, and thus each switching circuit (the step-down chopper circuit 109, the step-down chopper circuit 129, and the step-down chopper circuit 149) can certainly carry out the expected operation, also in the configuration shown in Fig. 3.

### <Other configuration example (3)>

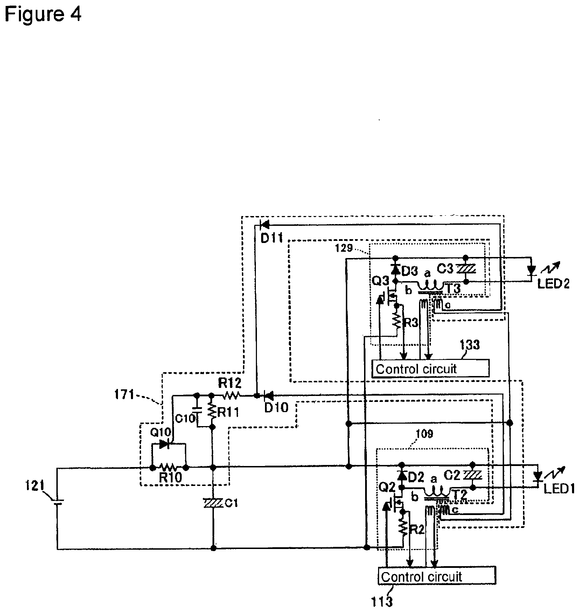

Here, Fig. 4 shows other circuit configuration example (3) of the illumination device according to the present embodiment. The circuit configuration example (3) shown in Fig. 4 differs from the circuit configuration example shown in Fig. 1 in that (1) a DC power source 121 is used instead of the power source 101 to omit the input filter, the rectifier circuit and the step-up chopper circuit, (2) a lighting circuit of the LED 2 is added, and (3) the configuration of the inrush current suppression circuit is changed for the lighting circuits of the LED 1 and LED 2.

Hereinafter, in the circuit configuration shown in Fig. 4, the same reference numerals as in Fig. 1 refer to the same circuit configuration as the illumination fixture shown in Fig. 1 and detailed explanations thereof will be omitted.

The configuration shown in Fig. 3 is provided with a step-down chopper circuit 129 as a lighting circuit of the LED 2 and a control circuit 133 therefor.

### [Step-down chopper circuit 129]

The step-down chopper circuit 129 includes the MOS-FET (Q3), the primary side a of the transformer T3 and one of the secondary sides (the input side b) of the transformer T3, the diode D3, the resistor R3, and the capacitor C3.

Next, the operation of the step-down chopper circuit 129 will be described. A signal from one of the secondary sides (the input side b) of the transformer T3 generates a detection signal for turning on the MOS-FET (Q3).

Furthermore, a current which flows while the MOS-FET (Q3) is turned on is detected by the resistor R3, so that a detection signal for turning the MOS-FET (Q3) off is generated.

The control circuit 133 compares each detection signal with a reference voltage to determine the timing of turning on/off the MOS-FET (Q3).

The control circuit 133 carries out control to match a current fed to the LED 2 with a predetermined current by generating a signal for turning on/off the MOS-FET (Q3) based on the determined timing.

### [Configuration of Inrush Current Suppression Circuit 171]

An inrush current suppression circuit 171 is configured as follows. In addition, also in the present embodiment, the resistor R10 acting as a current reducing component is provided for the purpose of reduction of the inrush current. Instead of the resistor R10, a thermistor may be used as the current reducing component.

The inrush current suppression circuit 171 shown in Fig. 4 includes the resistor R10, the switching element Q10, the capacitor C10, the resistors R11 and R12, the diodes D10, D11 and D12, and the other of the secondary sides (the output side c) of the transformers T1, T2 and T3.

The inrush current suppression circuit 171 is put in a non-operating state after the switching circuit (the step-down chopper circuit 109 and the step-down chopper circuit 129) is activated. More specifically, an input current fed from the power source 121 side is almost short-circuited (conducted) via not the resistor R10 as a current reducing component but the switching element Q10.

In Fig. 4, a starting voltage for turning on the thyristor that acts as the switching element Q10 is taken from the other of the secondary sides (the output side c) of the transformer T2 of the step-down chopper circuit 109, and the other of the secondary sides (the output side c) of the transformer T3 of the step-down chopper circuit 129.

The other of the secondary sides (the output side c) of each of the transformers of the step-down chopper circuit 109 and the step-down chopper circuit 129 acts as a trigger circuit. Then, the trigger circuit generates a trigger signal for operation/non-operation of the inrush current suppression circuit 171.

In the embodiment shown in Fig. 4, an OR circuit includes the diodes D10, D11 and D12, and the resistors R11 and R12 so that any one of the switching circuits, namely the step-down chopper circuit 109 or the step-down chopper circuit 129, may be firstly activated.

The output voltage of the OR circuit is then smoothed by the capacitor C10 to be a starting voltage for turning on the switching element Q10 (the thyristor).

Therefore, in the illumination device according to the present embodiment, the inrush current can be suppressed, after turning on the power source, by the resistor R10 as the current reducing component, also in the configuration shown in Fig. 4. After suppressing the inrush current, the illumination device according to the present embodiment can ensure the starting voltage of the thyristor acting as the switching element Q10 regardless of which of the step-down chopper circuit 109 and the step-down chopper circuit 129 is firstly activated.

Accordingly, in the illumination device according to the present embodiment, the switching element Q10 is immediately turned on after turning on the power source, and thus each switching circuit (the step-down chopper circuit 109 and the step-down chopper circuit 129) can certainly carry out the expected operation, also in the configuration shown in Fig. 4.

In addition, in the illumination device according to the first embodiment, the other circuit examples (1), (2) and (3), which are provided with a plurality of LEDs, are thus available as illumination systems which have a lighting circuit for each of LEDs as separate illumination equipment.

### (Second embodiment)

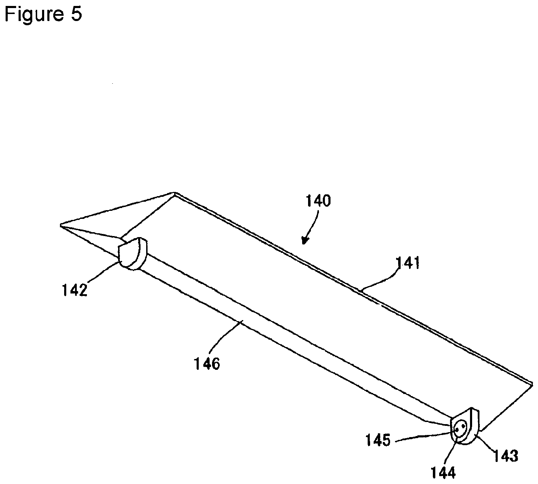

The LED lighting device of the first embodiment described above can be used in a straight tube type LED illumination fixture 140 shown in Fig. 5, for example. Fig. 5 is a diagram showing the straight tube type LED illumination fixture 140 according to a second embodiment. The straight tube type LED illumination fixture 140 shown in Fig. 5 is an illumination fixture for a single lamp.

As shown in Fig. 5, the LED illumination fixture 140 according to the second embodiment is provided with a fixture main body 141, a pair of sockets 142 and 143 having a lamp pin contact hole 145 and a spring 144 for attaching a straight tube type LED at both ends of the fixture main body 141, and a reflecting plate 146.

The same effect as that described in each of the aforementioned embodiments can be achieved by applying the LED lighting device given in each of the embodiments described above to the illumination fixture 140 shown in Fig. 5.

In addition, the LED lighting device given in each of the embodiments described above can be applied also to a fixture form including two or more lamps.

In addition, it is possible to employ various forms of LEDs, other than the straight tube type for use in facilities and stores.

### [Industrial Applicability]

An LED lighting device and an illumination fixture provided with the LED lighting device according to the present invention have an effect in which it is possible to put an inrush current suppression circuit in the non-operating state after activation to carry out an expected operation with reliability, and thus are beneficial as the illumination device and the like.

### [Description of Reference Numerals]

101 Power source
107 Step-up chopper circuit
109, 129, 149 Step-down chopper circuit
111, 131, 151, 171 Inrush current suppression circuit
113, 133, 153 Control circuit
121 DC power source
140 LED illumination fixture
141 Fixture main body
142, 143 Socket
144 Spring
145 Lamp pin contact hole
146 Reflecting plate

## Claims

1. An LED lighting device, comprising:
a first switching circuit (107, 109) connected between a power source (101) and at least one LED (LED1) ;
a capacitor (C1, C2) for smoothing a power source voltage generated by the power source (101) ; said first switching circuit (107, 109) being provided for stepping-up the voltage of the power source (101) or for stepping down the voltage at the capacitor (C1, C2) ;
an inrush current suppression circuit (111) that may be put in an operating state or in a non-operating state and that is adapted to suppress an inrush current flowing via the smoothing capacitor (C1, C2) when being in its operating state, wherein the inrush current suppression circuit (111) is in the operating state at a time of turning on the power source (101);
a trigger circuit provided for generating a trigger signal for putting the inrush current suppression circuit (111) in the non-operating state, wherein the trigger signal is generated from the first switching circuit (107, 109);
**characterized in that**
at least one further switching circuit (109) is connected between the first switching circuit (107) and the at least one LED (LED1),
or at least one further switching circuit (129, 149) is connected in parallel connection with the first switching circuit (109), each of the said parallel connected switching circuits (109, 129, 149) being connected with a separate LED (LED1, LED2, LED3), or
a parallel connection of further switching circuits (109, 129) is connected between the first switching circuit (107) and the at least one LED (LED1), each of the said parallel connected switching circuits (109, 129) being connected with a separate LED (LED1, LED2); wherein the trigger circuit is configured to generate the trigger signal from each of the switching circuits (107, 109, 129, 149) such that the inrush current suppression circuit (111) is put in the non-operating state by means of the trigger signal at timing of firstly starting the switching operating of one of the switching circuits (107, 109, 129, 149), whichever is firstly-activated after the time of turning on the power source (101).

2. The LED lighting device according to claim 1, wherein the trigger circuit uses a voltage of a secondary winding (c) of a winding component (T1, T2, T3, T4) of each of the switching circuits (107, 109).

3. An illumination fixture (140) including the LED lighting device according to claim 1 or 2 mounted thereon.

## Patentansprüche

1. LED-Beleuchtungsvorrichtung, aufweisend:
einen ersten Schaltkreis (107, 109), der zwischen eine Leistungsquelle (101) und wenigstens eine LED (LED1) geschaltet ist;
einen Kondensator (C1, C2) zum Glätten einer Leistungsquellenspannung, die durch die Leistungsquelle (101) erzeugt wurde;
wobei der erste Schaltkreis (107, 109) dazu bereitgestellt ist, die Spannung der Leistungsquelle (101) hochzusetzen oder die Spannung an dem Kondensator (C1, C2) tiefzusetzen;
einen Einschaltstromunterdrückungsschaltkreis (111), der in einen Betriebszustand oder in einen Nichtbetriebszustand gebracht werden kann und der dazu eingerichtet ist, einen über den Glättungskondensator (C1, C2) fließenden Einschaltstrom zu unterdrücken, wenn der in seinem Betriebszustand ist, wobei der Einschaltstromunterdrückungsschaltkreis (111) zum Zeitpunkt des Einschaltens der Leistungsquelle (101) in dem Betriebszustand ist;
einen Auslöseschaltkreis, der zur Erzeugung eines Auslösesignals bereitgestellt ist, um den Einschaltstromunterdrückungsschaltkreis (111) in den Nichtbetriebszustand zu bringen, wobei das Auslösesignal durch den ersten Schaltkreis (107, 109) erzeugt wird;
**dadurch gekennzeichnet, dass** zumindest ein weiterer Schaltkreis (109) zwischen den ersten Schaltkreis (107) und die wenigstens eine LED (LED1) geschaltet ist,
oder wenigstens ein weiterer Schaltkreis (129, 149) parallel zu dem ersten Schaltkreis (109) geschaltet ist, wobei jeder der parallel geschalteten Schaltkreise (109, 129, 149) mit einer separaten LED (LED1, LED2, LED3) verbunden ist, oder
eine Parallelschaltung von weiteren Schaltkreisen (109, 129) zwischen den ersten Schaltkreis (107) und die wenigstens eine LED (LED1) geschaltet ist, wobei jeder der parallel geschalteten Schaltkreise (109, 129) mit einer separaten LED (LED1, LED2) verbunden ist;
wobei der Auslöseschaltkreis dazu eingerichtet ist, das Auslösesignal von jedem der Schaltkreise (107, 109, 129, 149) zu erzeugen, so dass der Einschaltstromunterdrückungsschaltkreis (111) mittels des Auslösesignals zu einem Zeitpunkt in den Nichtbetriebszustand gebracht wird, zu dem der Schaltbetrieb von einem der Schaltkreise (107, 109, 129, 149) zuerst beginnt, welcher auch immer nach dem Zeitpunkt des Einschaltens der Leistungsquelle (101) zuerst aktiviert wird.

2. LED-Beleuchtungsvorrichtung nach Anspruch 1, wobei der Auslöseschaltkreis eine Spannung einer Sekundärwicklung (c) einer Wicklungskomponente (T1, T2, T3, T4) von jedem der Schaltkreise (107, 109) verwendet.

3. Beleuchtungshalterung (140) aufweisend eine daran angebrachte LED-Beleuchtungsvorrichtung nach Anspruch 1 oder 2.

## Revendications

1. Dispositif d'éclairage à LED, comprenant :
un premier circuit commutateur (107, 109) connecté entre une source d'alimentation (101) et au moins une LED (LED1) ;
un condensateur (C1, C2) pour lisser une tension de source d'alimentation générée par la source d'alimentation (101) ;
ledit premier circuit commutateur (107, 109) étant destiné à rehausser la tension de la source d'alimentation (101) ou abaisser la tension au niveau du condensateur (C1, C2) ;
un circuit de suppression de courant d'appel (111) qui peut être mis dans un état fonctionnel ou dans un état non fonctionnel et qui est adapté pour supprimer un courant d'appel s'écoulant via le condensateur de lissage (C1, C2) quand il est dans son état fonctionnel, dans lequel le circuit de suppression de courant d'appel (111) est dans l'état fonctionnel au moment de l'allumage de la source d'alimentation (101);
un circuit de déclenchement fourni pour générer un signal de déclenchement pour mettre le circuit de suppression de courant d'appel (111) dans l'état non fonctionnel, dans lequel le signal de déclenchement est généré depuis le premier circuit commutateur (107, 109) ; **caractérisé en ce que**
au moins un autre circuit commutateur (109) est connecté entre le premier circuit commutateur (107) et l'au moins une LED (LED1), ou au moins un autre circuit commutateur (129, 149) est connecté en connexion parallèle avec le premier circuit commutateur (109),
lesdits circuits commutateurs connectés en parallèle (109, 129, 149) étant connectés avec une LED séparée (LED1, LED2, LED3), ou une connexion parallèle d'autres circuits commutateurs (109, 129) est connectée entre le premier circuit commutateur (107) et l'au moins une LED (LED1), chacun desdits circuits commutateurs connectés en parallèle (109, 129) étant connecté avec une LED séparée (LED1, LED2);
dans lequel le circuit de déclenchement est configuré pour générer le signal de déclenchement depuis chacun des circuits commutateurs (107, 109, 129, 149) de telle manière que le circuit de suppression de courant d'appel (111) est mis dans l'état non fonctionnel au moyen du signal de déclenchement au moment d'un premier démarrage de l'opération de commutation de l'un des circuits commutateurs (107, 109, 129, 149), quel que soit le premier activé après le moment de l'allumage de la source d'alimentation (101).

2. Dispositif d'éclairage à LED selon la revendication 1, dans lequel le circuit commutateur utilise une tension d'un enroulement secondaire (c) d'un composant d'enroulement (T1, T2, T3, T4) de chacun des circuits commutateurs (107, 109).

3. Applique d'éclairage (140) incluant le dispositif d'éclairage à LED selon la revendication 1 ou 2 monté dessus.
